# EUROPÄISCHE PATENTSCHRIFT

(11) **EP 2 354 046 B1**
(45) Veröffentlichungstag und Bekanntmachung des Hinweises auf die Patenterteilung: **31.08.2016**
(21) Anmeldenummer: 10195835.3
(22) Anmeldetag: 20.12.2010
(51) Int. Cl.: B65G 1/08

(54) **Durchlaufregal mit Separiervorrichtung**
Feed rack with separating device
Etagère à couloir de roulement dotée d'un dispositif de séparation

(30) Priorität: 29.01.2010 DE 102010001356
(43) Veröffentlichungstag der Anmeldung: 10.08.2011
(73) Patentinhaber: BITO-Lagertechnik Bittmann GmbH, 55590 Meisenheim (DE)
(72) Erfinder: Herder, Frank, 55606, Bärweiler (DE)
(74) Vertreter: Richardt Patentanwälte PartG mbB

(56) Entgegenhaltungen:
- DE-U1- 20 313 194

## Beschreibung

Die Erfindung betrifft ein Durchlaufregal mit Separiervorrichtung zur Separierung von einer Aufgabeseite zu einer Entnahmeseite hin beförderten Ladungsträgern. Bei mit Schwerkraft betriebenen Durchlaufregalen für Ladungsträger, wie z. B. Paletten oder Behälter, steht an dem ersten Ladungsträger, der sich auf der Entnahmeseite befindet, der größte Druck an. Je länger die Durchlaufbahn des Durchlaufregals ist, desto höher ist dieser Druck. Aufgrund dieses hohen Staudrucks lässt sich der vorderste Ladungsträger an der Entnahmeseite nicht ohne Probleme entnehmen. Es kommt oft zu Beschädigungen an dem Ladungsträger und/oder Lagergut.

Um eine solche Beschädigung zu vermeiden, ist aus der EP 0 842 874 A2 eine Separiervorrichtung bekannt, die eine erste vorderste Palette von einer nachfolgenden zweiten Palette separiert. Wenn sich die erste Palette in Förderrichtung zur Entnahmeseite des Durchlaufregals bewegt, verschwenkt sie eine angrenzend an die Entnahmeseite vorgesehene Steuerfahne aus einer ersten Stellung, in der sie sich über die Förderebene hinaus erstreckt, in eine zweite Stellung, in der sie in der Förderebene liegt. Die Steuerfahne ist über ein Betätigungsgestänge so mit einer in Förderrichtung stromaufwärts angeordneten Anschlageinrichtung verbunden, dass die Anschlageinrichtung bei der genannten Bewegung aus einer Freigabestellung, in der sie sich unterhalb der Förderebene befindet, in eine Anschlagstellung bewegt wird, in der sie sich über die Förderebene hinaus erstreckt. An dieser Anschlageinrichtung schlägt die nachfolgende zweite Palette an. Sobald die erste Palette von dem Durchlaufregal entnommen wird, wird die Steuerfahneneinrichtung durch eine Vorspanneinrichtung wieder in die erste Stellung bewegt. Gleichzeitig wird die Anschlageinrichtung über das Betätigungsgestänge aus der Anschlagstellung in die Freigabestellung bewegt, so dass sich die zweite Palette zur Entnahmeseite hin bewegen kann. Diese Bewegung der Paletten ermöglicht es, dass die erste Palette ohne Staudruck von dem Durchlaufregal entnommen werden kann.

Weitere Durchlaufregale mit Separiervorrichtung sind aus der DE 203 131 94 U1, DE 196 368 42 A1, DE 324 30 86 C1, DE 103 03 508 B4, DE 43 09 222 A1, EP 0 968 938 B1, DE102006041826A1 bekannt. Ein Durlaufregal gemäß dem Oberbegriff des Anspruchs 1 ist z.B. aus der DE 203 13 194 U1 bekannt. Aus der EP 1 897 823 A2 ist ein Durchlaufregal mit einer Separiervorrichtung bekannt, bei dem eine Steuerfahne über eine Betätigungsstange mit einer Vereinzelungs-Anschlageinrichtung in Verbindung steht.

Der Erfindung liegt demgegenüber die Aufgabe zugrunde, ein verbessertes Durchlaufregal mit Separiervorrichtung zu schaffen.

Die der Erfindung zugrunde liegende Aufgabe wird mit den Merkmalen des Patentanspruchs 1 gelöst. Ausführungsformen der Erfindung sind in den abhängigen Patentansprüchen angegeben.

Nach der Erfindung hat das Durchlaufregal erste und zweite Steuerfahnen, wobei die zweite Steuerfahne in Förderrichtung hinter der ersten Steuerfahne liegt. Das Durchlaufregal hat ferner eine Vereinzelungs-Anschlageinrichtung mit einem Anschlagelement, das in Förderrichtung vor der ersten Steuerfahne liegt. Die Vereinzelungs-Anschlageinrichtung ist mit den ersten und zweiten Steuerfahnen so gekoppelt, dass sich das Anschlagelement in einem verriegelten Anschlagzustand befindet, wenn sich sowohl die erste Steuerfahne als auch die zweite Steuerfahne in deren zweiten Stellungen befinden, in denen sie in der Förderebene liegen. Wenn sich hingegen eine oder beide der ersten und zweiten Steuerfahnen in der ersten Stellung befindet, in der sich die betreffende Steuerfahne über die Förderebene hinaus erstreckt, befindet sich das Anschlagelement in einem Freigabezustand, in dem es einen Ladungsträger in der Förderrichtung passieren lässt. Unter dem "verriegelten Anschlagzustand" wird hier also ein Zustand des Anschlagelements verstanden, bei dem es zumindest in Förderrichtung ein Widerlager für einen Ladungsträger bildet. Unter dem "Freigabezustand" wird hier ein Zustand des Anschlagelements verstanden, bei dem es zumindest in Förderrichtung kein Widerlager für einen Ladungsträger bildet, sondert einen durchlaufenden Ladungsträger passieren läßt.

Durch die mit der Vereinzelungs-Anschlageinrichtung gekoppelten ersten und zweiten Steuerfahnen wird eine Separiervorrichtung geschaffen, die als Nachlaufsperre wirkt, sodass Ladungsträger an der Entnahmeseite bequem und beschädigungsfrei entnommen werden können.

Ausführungsformen der Erfindung sind besonders vorteilhaft, da in Förderrichtung zwei aufeinander folgende Ladungsträger keinen Abstand voneinander zu haben brauchen, um durch die Separiervorrichtung vereinzelt zu werden.

Ein weiterer besonderer Vorteil ist es, dass gemäß Ausführungsformen der Erfindung sowohl Ladungsträger mit in Förderrichtung unterbrochener Bodenfläche als auch Ladungsträger mit einer in Förderrichtung durchgehender Bodenfläche, wie zum Beispiel Ladungsträger mit durchgehenden Kufen, durch die Separiervorrichtung vereinzelt werden können, wobei auch ein Mischbetrieb mit Ladungsträgern unterschiedlicher Länge und/oder Ladungsträgern mit und ohne in Förderrichtung unterbrochener Bodenfläche möglich ist. Insbesondere ermöglichen Ausführungsformen der Erfindung den Durchlauf von Euro-Paletten in Querrichtung, d.h. mit den Kufen der Euro-Palette senkrecht zur Förderrichtung.

Nach einer Ausführungsform der Erfindung ist die erste Steuerfahne so ausgebildet, dass sie in einer Unterbrechung der Bodenfläche eines der Ladungsträger ihre erste Stellung einnehmen kann. Nach einer Ausführungsform der Erfindung ist die zweite Steuerfahne so ausgebildet, dass sie ihre erste Stellung nicht innerhalb einer der Unterbrechungen einnehmen kann. Dies kann dadurch erreicht werden, dass die ersten und zweiten Steuerfahnen eine unterschiedliche Länge und/oder eine unterschiedliche Formgebung aufweisen.

Nach einer Ausführungsform der Erfindung schließt die zweite Steuerfahne einen stumpfen Winkel im Bereich von zum Beispiel 135 - 175° ein. Dies hat den Vorteil, dass das Anschlagelement während der Entnahme des vorderen Ladungsträgers an der Entnahmeseite noch verriegelt bleibt und dass die Entnahme des Ladungsträgers an der Entnahmeseite bequem und sicher möglich ist.

Nach einer Ausführungsform der Erfindung ist die Kopplung der Vereinzelungs-Anschlageinrichtung mit den ersten und zweiten Steuerfahnen mechanisch, elektromechanisch, elektrisch, elektronisch, elektromagnetisch und/oder optisch ausgebildet. Beispielsweise kann die aktuelle Stellung der ersten Steuerfahne durch einen ersten elektromechanischen, elektrischen, elektronischen oder optischen Sensor erfasst werden und die aktuelle Stellung der zweiten Steuerfahne durch einen ebensolchen zweiten Sensor. Die von den Sensoren abgegebenen Sensorsignale werden von einer Auswertungseinheit, wie zum Beispiel einem logischen UND-Gatter, ausgewertet. Die Auswertungseinheit gibt daraufhin ein Steuerungssignal an die Vereinzelungs-Anschlageinrichtung ab, um ggf. das Anschlagelement zu verriegeln oder zu entriegeln. Durch das Steuerungssignal wird also der Soll-Zustand des Anschlagelements vorgegeben, d.h. ob das Anschlagelement den verriegelten Anschlagzustand oder den Freigabezustand einnehmen soll. Die Vereinzelungs-Anschlageinrichtung kann einen Aktuator aufweisen, um aufgrund des Steuerungssignals den Soll-Zustand einzustellen.

Nach einer Ausführungsform der Erfindung können die Sensorsignale der ersten und zweiten Sensoren drahtgebunden oder drahtlos, wie zum Beispiel über ZigBee, an die Auswertungseinheit übertragen werden. Ebenso kann das von der Auswertungseinheit abgegebene Steuerungssignal drahtgebunden oder drahtlos, wie zum Beispiel als ZigBee-Signal, an die Vereinzelungs-Anschlageinrichtung übertragen werden.

Nach einer Ausführungsform der Erfindung erfolgt die Kopplung zwischen der Vereinzelungs-Anschlageinrichtung und den ersten und zweiten Steuerfahnen mechanisch mittels eines Konturblocks. Der Konturblock hat eine Führungsöffnung, wie zum Beispiel eine Steuerungskulisse, in der eine Rastposition definiert ist, um das Anschlagelement zu arretieren, wenn der Konturblock durch die ersten und zweiten Steuerfahnen in eine Raststellung geschwenkt ist. Wenn der Konturblock seine Raststellung eingenommen hat, befindet sich also das Anschlagelement in seinem verriegelten Anschlagzustand. Im gegenteiligen Fall befindet sich das Anschlagelement in seinem Freigabezustand.

Diese mechanische Kopplung ist ganz besonders vorteilhaft, da sie mit konstruktiv geringem Aufwand, kostengünstig und keinem oder geringem Wartungsaufwand sowie langer Lebensdauer realisierbar ist, und zwar auch bei wiedrigen Umgebungsbedingungen, zum Beispiel hohen Temperaturen und/oder staubhaltiger Luft.

Nach einer Ausführungsform der Erfindung hat die Steuerungskulisse einen ersten kreissegmentförmigen Abschnitt und einen zweiten Abschnitt, wobei der zweite Abschnitt einen Winkel mit dem ersten Abschnitt einschließt. Beispielsweise kann der zweite Abschnitt im Wesentlichen senkrecht auf dem kreissegmentförmigen Abschnitt stehen.

Die Separiervorrichtung hat ferner eine Verbindungsstange, die an der ersten Steuerfahne schwenkbar angelenkt ist und die ein Langloch aufweist. In der Steuerungskulisse befindet sich eine Achse, die durch das Langloch verläuft und an der ein erstes Ende einer ersten Betätigungsstange befestigt ist. Ein zweites Ende dieser ersten Betätigungsstange ist exzentrisch zu einer Schwenkachse des Anschlagelements an der Vereinzelungs-Anschlageinrichtung angelenkt. Ein erstes Ende einer zweiten Betätigungsstange ist an dem Konturblock angelenkt und das zweite Ende der zweiten Betätigungsstange ist exzentrisch zu einer Schwenkachse der zweiten Steuerfahne an der zweiten Steuerfahne angelenkt.

Die Achse befindet sich nur dann in dem zweiten Abschnitt der Steuerungskulisse, um die Betätigungsstange in der Rastposition zu arretieren, sodass auch das Anschlagelement arretiert ist, wenn sich die ersten und zweiten Steuerfahnen jeweils in deren zweiten Stellung befinden.

Nach einer Ausführungsform der Erfindung beträgt der Winkel zwischen den ersten und zweiten Abschnitten der Steuerungskulisse zwischen 45 und 135°, insbesondere 90°.

Nach einer Ausführungsform der Erfindung verbleibt das Anschlagelement in seinem verriegelten Anschlagzustand auch dann noch, nachdem die zweite Steuerfahne um einen vorgegebenen Öffnungswinkel aus der zweiten Stellung in Richtung auf die erste Stellung verschwenkt worden ist. Dies hat den Vorteil einer besonders bequemen und sicheren Entnahme des vorderen Ladungsträgers an der Entnahmeseite.

Nach einer Ausführungsform der Erfindung hat der erste Abschnitt der Steuerungskulisse eine bezüglich des Anlenkpunkts des ersten Endes der zweiten Betätigungsstange an dem Konturblock konkaven Verlauf. Nach einer Ausführungsform der Erfindung liegt der Anlenkpunkt exzentrisch im Inneren des von dem kreissegmentförmigen Abschnitt definierten Kreises.

Im Weiteren werden Ausführungsformen der Erfindung mit Bezugnahme auf die Zeichnungen näher erläutert. Es zeigen:
- Figur 1: eine Seitenansicht einer ersten Ausführungsform eines erfindungsgemäßen Durchlaufregals, wenn sich die Steuerfahnen in deren zweiten Stellungen befinden;

- Figur 2: die Vereinzelung von Ladungsträgern mit in Förderrichtung unterbrochener Bodenfläche gemäß einer Ausführungsform des Durchlaufregals,
- Figur 3: die Vereinzelung von Ladungsträgern mit in Förderrichtung durchgehenden Kufen gemäß einer Ausführungsform des Durchlaufregals,
- Figur 4: die Vereinzelung von Ladungsträgern, die einen in Förderrichtung unterbrochenen Boden und alternierend in Förderrichtung durchgehende Kufen aufweisen gemäß einer Ausführungsform des Durchlaufregals,
- Figur 5: Komponenten einer Ausführungsform einer Separiervorrichtung,
- Figur 6: verschiedene Zustände der Separiervorrichtung gemäß Figur 5 in Abhängigkeit von den Stellungen der Steuerfahnen,
- Figur 7: eine weitere Ausführungsform eines erfindungsgemäßen Durchlaufregals,
- Figur 8: eine Detailansicht des Durchlaufregals der Figur 7,
- Figur 9: eine weitere Detailansicht des Durchlaufregals der Figuren 8 und 9.

Im Weiteren werden einander entsprechende Elemente der nachfolgenden Ausführungsformen jeweils mit denselben Bezugszeichen gekennzeichnet.

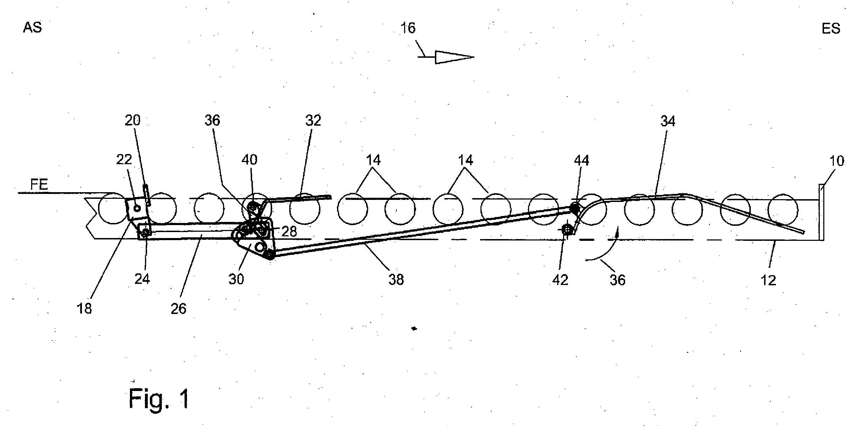

Die Figur 1 zeigt einen entnahmeseitigen Abschnitt eines Durchlaufregals mit Separiervorrichtung zur Separierung von von einer Aufgabeseite AS zu einem Entnahmeanschlag 10 der Entnahmeseite ES hin beförderten Ladungsträgern. Das Durchlaufregal wird durch ein oder mehrere Rollenbahnen gebildet, die eine Neigung von zum Beispiel ca. 4 % aufweisen. Eine Rollenbahn hat dabei eine Vielzahl von Rollen 14, die entlang der Förderrichtung 16 angeordnet sind.

Die Separiervorrichtung wird durch eine Vereinzelungs-Anschlageinrichtung 18 gebildet, die ein Anschlagelement 20 aufweist. Die Vereinzelungs-Anschlageinrichtung 18 ist um eine ortsfeste Achse 22 schwenkbar gelagert. Die VereinzelungsAnschlageinrichtung 18 kann eine Rückstellfeder aufweisen, um das Anschlagelement 20 in seine in der Fig.1 gezeigte Position zurückzubringen, nachdem ein Ladungsträger durchgelaufen ist. In der gezeigten Position, in der das Anschlagelement über die Förderebene FE hinausragt, kann die Anschlageinrichtung 18 in den verriegelten Anschlagzustand übergehen.

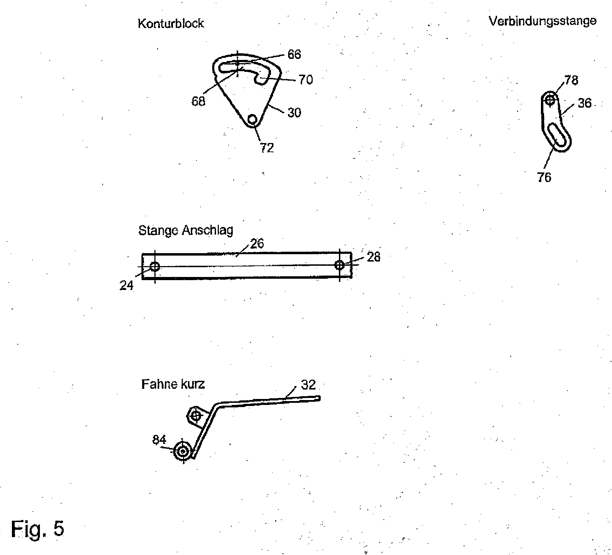

Exzentrisch zu der Achse 22 ist ein Ende 24 einer Betätigungsstange 26 an der Vereinzelungs-Anschlageinrichtung 18 schwenkbar angelenkt. Das andere Ende 28 der Betätigungsstange 26 ist mit einer Achse verbunden, welche in eine Führungsöffnung (vgl. Steuerungskulisse 66 der Fig. 5) eines Konturblocks 30 eingreift.

Die Separiervorrichtung hat eine erste Steuerfahne 32 und eine längere, abgewinkelte Steuerfahne 34. Die Steuerfahne 34 hat zwei in etwa gleich lange Schenkel, die einen stumpfen Winkel von zum Beispiel ca. 155° einschließen.

Die Vereinzelungs-Anschlageinrichtung 18, die Steuerfahne 32 und die Steuerfahne 34 sind in dieser Reihenfolge in Förderrichtung entlang der Rollenbahn 12 angeordnet.

Die Steuerfahne 32 ist über eine Verbindungsstange 36 mit dem Konturblock 30 gekoppelt und die Steuerfahne 34 ist über eine Betätigungsstange 38 mit dem Konturblock 30 gekoppelt. Die Steuerfahne 32 ist um eine Achse 40 und die Steuerfahne 34 um eine Achse 42 schwenkbar gelagert.

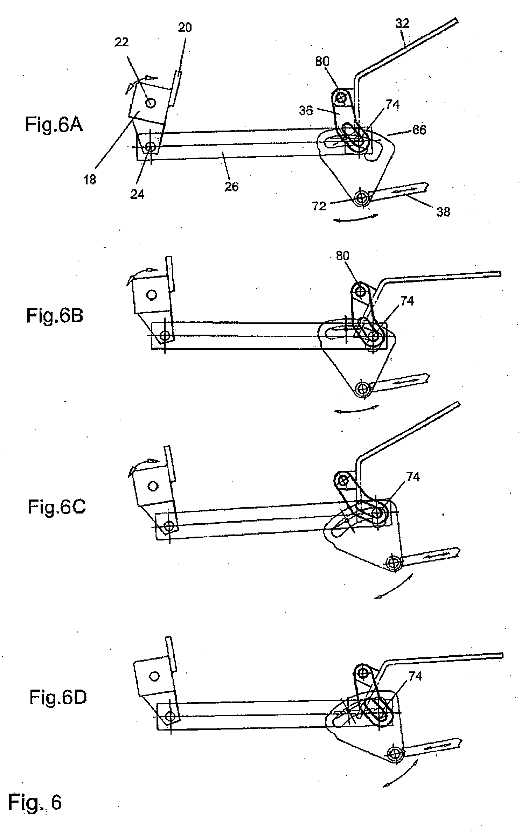

Beim Schwenken der Steuerfahne 32 um die Achse 40 wirkt die Steuerfahne 32 auf die Verbindungsstange 36 und damit auf die in der Führungsöffnung des Konturblocks 30 befindliche Achse (vgl. Achse 74 der Fig. 6). Beim Schwenken der Steuerfahne 34 um die Achse 42 wirkt die Steuerfahne 34 über die Betätigungsstange 38 auf den Konturblock 30, wobei die Betätigungsstange 38 exzentrisch zu der Achse 42 an einem Anlenkpunkt 44 an der Steuerfahne 34 angelenkt ist.

Die Figur 1 zeigt einen Zustand des Durchlaufregals, in dem die Steuerfahnen 32 und 34 jeweils deren zweite Stellung einnehmen, in der die Steuerfahnen 32 und 34 in, bzw. was den abgewinkelten Schenkel der Steuerfahne 34 betrifft, unterhalb der Förderebene FE liegen. In diesem Zustand (Zustand 4 - vgl. nachfolgende Tabelle) befindet sich das Anschlagelement 20 in einem verriegelten Anschlagzustand, d.h. es bildet ein Widerlager für einen von der Aufnahmeseite AS auf das Anschlagelement 20 auftreffenden Ladungsträger. Das Anschlagelement 20 wird in seinem verriegelten Anschlagzustand von einem von der Aufnahmeseite AS her auftreffenden Ladungsträger nicht um die Achse 22 weggeschwenkt und lässt den Ladungsträger nicht passieren. Dies ist dadurch bedingt, dass die Vereinzelungs-Anschlageinrichtung 18 durch die Betätigungsstange 26, die in dem Konturblock 30 aufgrund der Stellung der Steuerfahnen 32 und 34 arretiert ist, festgehalten wird.

Wenn sich die Steuerfahne 32 in ihrer ersten Stellung befindet, in der sie sich über die Förderebene FE hinaus erstreckt und/oder wenn dies für die Steuerfahne 34 der Fall ist, so wird die Betätigungsstange 26 von dem Konturblock 30 nicht arretiert, sodass das Anschlagelement 20 um die Achse 22 schwenkbar bleibt und daher einen aus der Förderrichtung 16 von links auf das Anschlagelement 20 auftreffenden Ladungsträger passieren lässt, indem die Vereinzelungs-Anschlageinrichtung 18 durch den passierenden Ladungsträger um die Achse 22 im Uhrzeigersinn gedreht wird.

Die Steuerfahnen 32 und 34 nehmen deren erste Stellungen ein, sofern sie nicht durch einen aufstehenden oder durchlaufenden Ladungsträger in den in der Figur 1 gezeigten zweiten Stellungen gehalten werden. Hierzu können die Steuerfahnen 32 und 34 mit Federkräften beaufschlagt sein, welche jeweils eine Rückstellkraft aus der in Figur 1 gezeigten zweiten Stellung in die erste Stellung auf die Steuerfahnen 32 bzw. 34 ausüben.

Die nachfolgende Tabelle zeigt die verschiedenen Zustände, die das Durchlaufregal gemäß Figur 1 hinsichtlich des Anschlagelements 20 einnehmen kann.

| Zustand | "Anschlag" zu / auf | "Fahne kurz" oben / unten | "Fahne lang" oben / unten |
|---|---|---|---|
| 1 | auf | oben | oben |
| 2 | auf | unten | oben |
| 3 | auf | oben | unten |
| 4 | zu | unten | unten |

In dem Zustand 1 ist das Anschlagelement "auf", d.h. es befindet sich in einem entriegelten Anschlagzustand, in dem es einen Ladungsträger in der Förderrichtung passieren lässt (Freigabezustand). Dieser erste Zustand wird eingenommen, wenn sowohl die erste, kurze Steuerfahne 32 als auch die zweite, lange Steuerfahne 34 jeweils in deren ersten Stellung, d.h. "oben", sind. Der zweite Zustand wird eingenommen, wenn die Steuerfahne 32 die zweite Stellung einnimmt, d.h. "unten" ist, und die zweite Steuerfahne 34 die erste Stellung, d.h. "oben" hat.

In dem zweiten Zustand ist das Anschlagelement 20 "auf". Entsprechendes gilt für den dritten Zustand, in dem die Steuerfahne 32 "oben" und die Steuerfahne 34 "unten" ist. Nur in dem vierten Zustand, in dem sowohl die Steuerfahne 32 als auch die Steuerfahne 34 "unten" sind, ist das Anschlagelement "zu", d.h. es befindet sich in seinem verriegelten Anschlagzustand, in dem es einen aus der Förderrichtung auftreffenden Ladungsträger nicht passieren lässt.

Anstelle durch eine mechanische Kopplung der Steuerfahnen 32 und 34 über den Konturblock 30 und die Betätigungsstange 26 mit der Vereinzelungs-Anschlageinrichtung 18, können diese Zustände auch durch andere Arten der Kopplung realisiert werden, wie zum Beispiel durch eine mechanische, elektromechanische, elektrische, elektronische, elektromagnetische und/oder optische Kopplung.

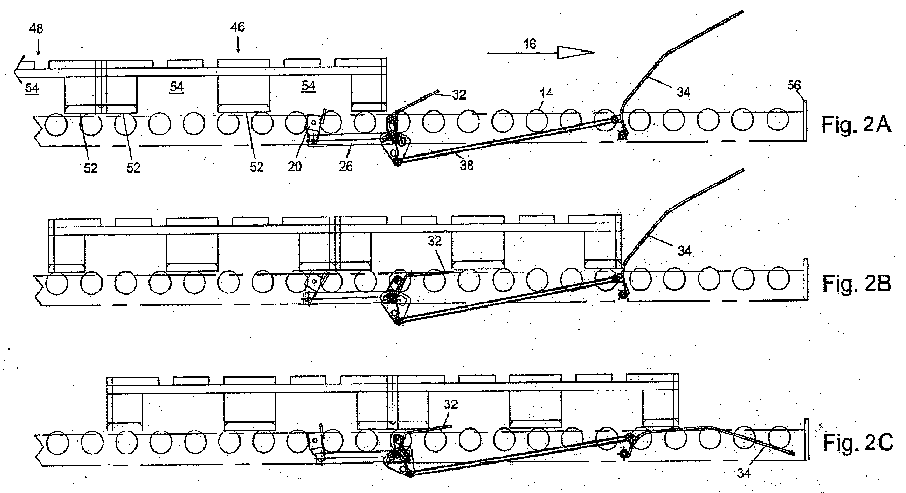

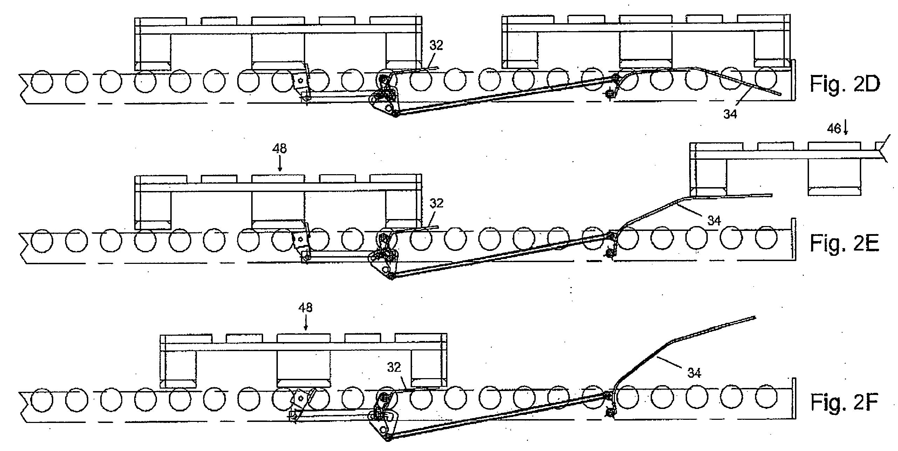

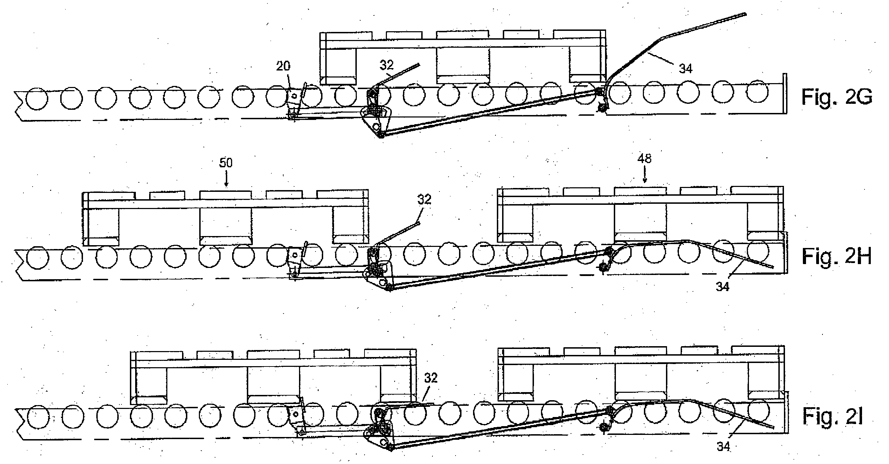

Die Figur 2 zeigt das Durchlaufregal in der Ausführungsform der Figur 1 zu aufeinander folgenden Zeitpunkten während des Durchlaufs von Ladungsträgern 46, 48 und 50 in der Förderrichtung 16. Bei den Ladungsträgern 46, 48 und 50 handelt es sich um identische Euro-Paletten, die das Durchlaufregal in Querrichtung, d.h. mit den Kufen 52 senkrecht zur Förderrichtung 16, durchlaufen. Aufgrund dessen haben die Ladungsträger 46, 48 und 50 jeweils eine in Förderrichtung 16 unterbrochene Bodenfläche, d.h. die Bodenflächen haben Unterbrechungen 54.

Die Figur 2A zeigt das Durchlaufregal in der Ausführungsform gemäß Figur 1 zu einem Zeitpunkt tA. Zu diesem Zeitpunkt haben die Steuerfahnen 32 und 34 jeweils deren erste Stellung, sodass sich das Anschlagelement 20 in seinem entriegelten Anschlagzustand befindet, in dem es den Ladungsträger 46 bereits teilweise passieren gelassen hat und gerade zurückschwenkt. Die Ladungsträger 48 und 46 sind zu dem Zeitpunkt tA nicht voneinander beabstandet, sondern unmittelbar aneinander liegend, wie in der Figur 2A dargestellt.

Die Figur 2 zeigt das Durchlaufregal zu einem nachfolgenden Zeitpunkt tB, zu dem der Ladungsträger 46 das Anschlagelement 20 vollständig passiert und die Steuerfahne 32 in der zweiten Stellung gegen die Kraft der Rückstellfeder der Steuerfahne 32 herunter gedrückt hat. Die Steuerfahne 34 ist zu dem Zeitpunkt tB unverändert in deren ersten Stellung, sodass das Anschlagelement 20 nach wie vor seinen entriegelten Anschlagzustand hat.

Zu dem Zeitpunkt tC hat der Ladungsträger 46 die zweite Steuerfahne 34 erreicht und drückt diese entgegen der Rückstellkraft der Feder der zweiten Steuerfahne 34 in deren zweite Stellung, sodass das Anschlagelement 20 seinen verriegelten Anschlagzustand einnimmt, nachdem es zurückgeschwenkt ist. Allerdings ragt das Anschlagelement 20 zu dem Zeitpunkt tC in eine der Unterbrechungen 54 des Ladungsträgers 48, sodass zunächst kein Anschlag des Ladungsträgers 48 an dem Anschlagelement 20 gebildet wird.

Wie in der Figur 2D gezeigt, erreicht der Ladungsträger 48 zu dem nachfolgenden Zeitpunkt tD mit seiner Vorderkante die Steuerfahne 32, sodass diese in deren zweiten Stellung verbleibt, wobei der Ladungsträger 46 die Steuerfahne 34 ebenfalls in deren zweiter Stellung hält. Das Anschlagelement 20 verbleibt also in seinem verriegelten Anschlagzustand, sodass der Ladungsträger 48 mit der Vorderkante seiner mittleren Kufe 52 an dem Anschlagelement 20 anschlägt und dort gehalten wird, sodass der Ladungsträger 48 gestoppt und von dem Ladungsträger 46 separiert wird, der weiter durch das Durchlaufregal in der Förderrichtung 16 weiterfährt, bis der Ladungsträger 46 den Endanschlag 10 des Durchlaufregals an der Entnahmeseite ES erreicht und dort zum Stillstand kommt, wie in der Figur 2D gezeigt.

Zu dem Zeitpunkt tE wird der vordere Ladungsträger 46 aus seiner Entnahmeposition manuell oder maschinell herausgenommen, wie in der Figur 2E gezeigt, sodass die Steuerfahne 34 ein Stück weit in Richtung auf ihre erste Stellung zurückschwenkt. Nach der hier betrachteten Ausführungsform verbleibt das Anschlagelement 20 in seinem verriegelten Anschlagzustand, sodass der nachfolgende Ladungsträger 48 noch festgehalten wird. Dies ist besonders vorteilhaft, da so vermieden wird, dass noch während der Entnahme des vorderen Ladungsträgers 46 der nachfolgende Ladungsträger 48 auf diesen aufprallen kann. Bei dieser Ausführungsform ist die gewinkelte Ausführung der Steuerfahne 34 besonders vorteilhaft, da so die hintere Kante des Ladungsträgers 46 während der Entnahme bequem mit der Steuerfahne 34 in Kontakt bleiben kann, ohne die Handhabung zu beeinträchtigen.

Erst nach der vollständigen Entnahme des Ladungsträgers 46, d.h. nachdem die Steuerfahne 34 ihre erste Stellung eingenommen hat, wird die Verriegelung des Anschlagelements 20 gelöst, und der Ladungsträger 48 setzt sich aufgrund der Hangabtriebskraft in Förderrichtung 16 in Bewegung, wie in der Figur 2F zum Zeitpunkt tF gezeigt ist.

Nachdem die vordere Kufe des Ladungsträgers 48 die Steuerfahne 32 passiert hat, schwenkt diese in ihre erste Stellung und ragt in die hintere Unterbrechung 54 des Ladungsträgers 48 (Figur 2G zum Zeitpunkt tG). Der Ladungsträger 48 passiert dann die Steuerfahne 32 und bringt die Steuerfahne 34 in deren zweite Stellung, wenn er seine Entnahmeposition erreicht, wie in der Figur 2H gezeigt ist. Durch die Vorderkufe 52 eines mit einem Abstand nachfolgenden Ladungsträgers 50 wird dann zu einem nachfolgenden Zeitpunkt tl auch die Steuerfahne 32 in die zweite Stellung verschwenkt, sodass das Anschlagelement 20 seinen verriegelten Anschlagzustand einnimmt und infolgedessen den Ladungsträger 50 in der in Figur 2I gezeigten Position festhält. Die nachfolgende Entnahme des Ladungsträgers 48 entspricht der Figur 2E.

Die Ausführungsform der Figur 2 ist also besonders vorteilhaft, da Ladungsträger mit in Förderrichtung 16 unterbrochener Bodenfläche voneinander separiert werden, und zwar unabhängig davon, ob sie unmittelbar aneinander anliegend sind, wie dies bei den Ladungsträgern 46 und 48 zu dem Zeitpunkt tA der Fall ist, oder ob sie voneinander beabstandet sind, wie dies bei den Ladungsträgern 50 und 48 der Fall ist.

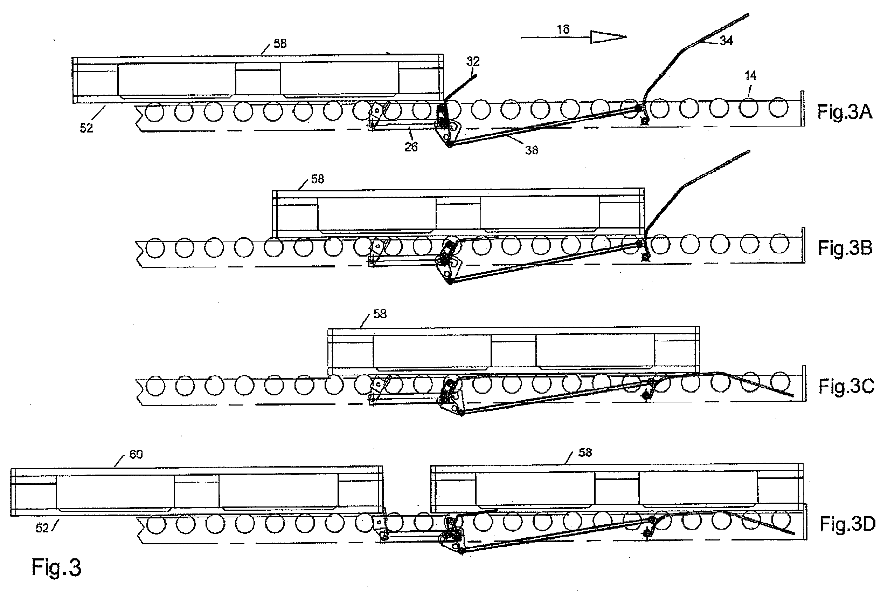

Die Figur 3 zeigt das Durchlaufregal mit Ladungsträgern 58 und 60, die jeweils durchgehende Kufen haben, welche in der Fördereinrichtung 16 ausgerichtet sind. Im Gegensatz zu der Ausführungsform gemäß Figur 2 durchlaufen also die Ladungsträger 58 und 60 das Durchlaufregal nicht in Quer- sondern in Längsrichtung.

Die Figur 3A zeigt das Auftreffen des Ladungsträgers 58 auf die Steuerfahne 32. Die Steuerfahnen 32 und 34 haben jeweils deren erste Stellung, sodass das Anschlagelement 20 entriegelt ist. Die Figur 3B zeigt den Ladungsträger 58 zu einem nachfolgenden Zeitpunkt, nachdem er mit seiner durchgehenden Kufe 52 die Steuerfahne 32 heruntergedrückt und in deren zweite Stellung gebracht hat. Da die Steuerfahne 34 noch in der ersten Stellung ist, ist das Anschlagelement 20 nach wie vor entriegelt und wird durch die vorbei laufende Kufe 52 des Ladungsträgers 58 in seiner in der in Figur 3A, 3B und 3C gezeigten Position gehalten.

Wie in der Figur 3C gezeigt, erreicht der Ladungsträger 58 zu einem nachfolgenden Zeitpunkt die Steuerfahne 34 und drückt diese herunter in deren zweite Stellung, sodass das Anschlagelement 20, nachdem es nach dem Passieren des Ladungsträgers 58 durch eine Rückstellfeder entgegen dem Uhrzeigersinn um seine Achse 22 (vgl. Figur 1) geschwenkt worden ist, seinen verriegelten Anschlagzustand einnimmt. Wie in der Figur 3D gezeigt, wird daher der nachfolgende Ladungsträger 60, der mit einem zeitlichen Abstand auf den Ladungsträger 58 folgt, von dem Anschlagelement 20 gestoppt, solange der Ladungsträger 58 noch nicht entnommen worden ist.

Gemäß der Ausführungsform der Figur 3 ist also die VereinzelungsAnschlageinrichtung 18 so ausgebildet, dass diese ein Rückstellelement, wie zum Beispiel eine Rückstellfeder, aufweist, um das Anschlagelement 20 aus seiner in den Figuren 3A, 3B und 3C gezeigten Freigabeposition in die Position des verriegelten Anschlagzustands entgegen dem Uhrzeigersinn um die Achse 22 (Figur 1) zu schwenken. Wenn das Anschlagelement 20 aufgrund der Rückstellkraft aus seiner Freigabeposition der Figur 3C in die Position des verriegelten Anschlagzustands zurückschwenkt, nachdem der Ladungsträger 58, welcher mit seiner Kufe 52 zuvor das Anschlagelement 20 entgegen der Rückstellkraft in der Freigabeposition gehalten hat (vgl. Figur 3C), das Anschlagelement 20 passiert hat und dadurch die Steuerfahnen 32 und 34, wie in der Figur 3D gezeigt, in deren zweiten Stellungen gehalten werden, so nimmt das Anschlagelement 20 seinen verriegelten Anschlagzustand an, in dem es ein Widerlager für den nachfolgenden Ladungsträger 60 bildet.

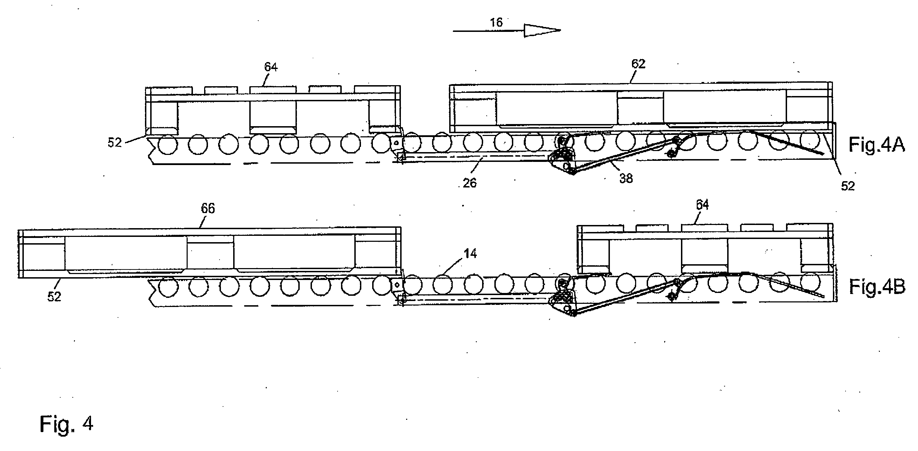

Die Figur 4 zeigt eine Ausführungsform des Durchlaufregals mit alternierenden Ladungsträgern 62 und 64, wobei der Ladungsträger 62 das Durchlaufregal in Längsrichtung und der Ladungsträger 64 das Durchlaufregal in Querrichtung durchläuft. Die Figur 4A zeigt den Ladungsträger 62 in seiner Entnahmeposition, nachdem er den Endanschlag 10 erreicht hat. In dieser Position drückt der Ladungsträger 62 mit seinem Gewicht die Steuerfahnen 32 und 34 entgegen der jeweiligen Rückstellkräfte in deren zweite Stellungen, sodass das Anschlagelement seinen verriegelten Anschlagzustand annimmt und ein Widerlager für den nachfolgenden Ladungsträger 64 bildet. Nach der Entnahme des Ladungsträgers 62 wird das Anschlagelement 20 entriegelt, sodass der Ladungsträger 64 in seine in der Figur 4B gezeigte Entnahmeposition gelangt. Dort hält er mit seiner in Förderrichtung 16 hinteren Kufe 52 die Steuerfahne 32 und mit seiner mittleren Kufe 52 die Steuerfahne 34 jeweils in der zweiten Stellung, sodass wiederum das Anschlagelement 20 seinen verriegelten Anschlagzustand einnimmt und daher ein Widerlager für einen nachfolgenden Ladungsträger 66 bildet, der in der hier betrachteten Ausführuhgsform das Durchlaufregal in Längsrichtung durchläuft.

Bei der hier betrachteten Ausführungsform sind die Steuerfahnen 32 und 34 so positioniert, dass die Steuerfahne 32 durch die hintere Kufe 52 und die Steuerfahne 34 durch die mittlere Kufe des Ladungsträgers 62, der in Querrichtung das Durchlaufregal durchlaufen hat und der sich nun in seiner Entnahmeposition befindet, in der jeweils zweiten Stellung gehalten werden. Besonders vorteilhaft ist dabei, dass die Ladungsträger beispielsweise abwechselnd oder in einer beliebigen zufälligen Reihenfolge in Querrichtung oder in Längsrichtung das Durchlaufregal durchlaufen können.

Die Figur 5 zeigt die Komponente einer Ausführungsform einer erfindungsgemäßen Separiervorrichtung. Dazu gehört der Konturblock 30, der eine Steuerungskufisse 66 aufweist. Die Steuerungskulisse 66 hat einen ersten Abschnitt 68, der kreissegmentförmig ausgebildet ist, und einen zweiten Abschnitt 70, durch den eine Rastposition für eine durch die Steuerungskulisse 66 verlaufende Achse 74 (vgl. 6) definiert ist. Der Konturblock 30 hat ferner einen Anlenkpunkt 72 zum Anlenken der-Betätigungsstange 38 (vgl. Figuren 1 und 6). Der erste Abschnitt 68 der Steuerungskulisse hat hier einen bezüglich des Anlenkpunkts 72 konkaven Verlauf.

Die Figur 5 zeigt ferner die Betätigungsstange 26 sowie die Steuerfahne 32 und die Verbindungsstange 36. Die Figur 6 zeigt diese Komponente im montierten Zustand. Im montierten Zustand ist die Achse 74 durch die Steuerungskulisse 66 und das Langloch 76 (vgl. Figur 5) der Verbindungsstange 36 geführt. Das Loch 78 der Verbindungsstange 36 ist dagegen auf der Schwenkachse 80 der Steuerfahne 32 montiert, um welche die Verbindungsstange 36 geschwenkt wird, wenn die Steuerfahne 32 um den Drehpunkt 80 geschwenkt wird. Die Betätigungsstange 38 ist an dem Anlenkpunkt 72 des Konturblocks 30 angelenkt.

Ferner ist die Achse 74 mit dem Ende 28 der Betätigungsstange 26 verbunden. Das andere Ende 24 der Betätigungsstange 26 ist dagegen mit der Vereinzelungs-Anschlageinrichtung 18 verbunden (vgl. Figur 1). Wenn die Steuerfahne 32 und/oder die Steuerfahne 34 von einem Ladungsträger überfahren werden oder ein Ladungsträger entnommen wird, so hat dies aufgrund der mechanischen Kopplung der Elemente verschiedene Positionen der Achse 74 zur Folge, die zu den verschiedenen Zuständen gemäß obiger Tabelle korrespondieren:
In der in der Figur 6A gezeigten Position befinden sich die Steuerfahnen 32 und 34 jeweils in deren ersten Stellungen. Dies hat zur Folge, dass sich die Achse in dem kreissegmentförmigen Abschnitt 68 der Steuerungskulisse befindet, was eine Schwenkbewegung des Anschlagelements 20 um seine Achse 22 im Uhrzeigersinn zulässt. Dies entspricht dem ersten Zustand gemäß obiger Tabelle.

kreissegmentförmigen Abschnitt 68 der Steuerungskulisse befindet, was eine Schwenkbewegung des Anschlagelements 20 um seine Achse 22 im Uhrzeigersinn zulässt. Dies entspricht dem ersten Zustand gemäß obiger Tabelle.

Die Figur 6B zeigt den zweiten Zustand. Auch in dem zweiten Zustand befindet sich die Achse 74 in dem kreissegmentförmigen Abschnitt 68 der Steuerungskulisse 66, sodass auch hier das Anschlagelement 20 entriegelt ist. Entsprechendes gilt für den in der Figur 6C gezeigten dritten Zustand.

Allein in dem Zustand 4, der in der Figur 6D gezeigt ist, befindet sich die Achse 74 in dem Abschnitt 70 der Steuerungskulisse 66, und nimmt dort ihre Rastposition ein, die kein Verschwenken des Anschlagelements 20 um die Achse 22 zulässt.

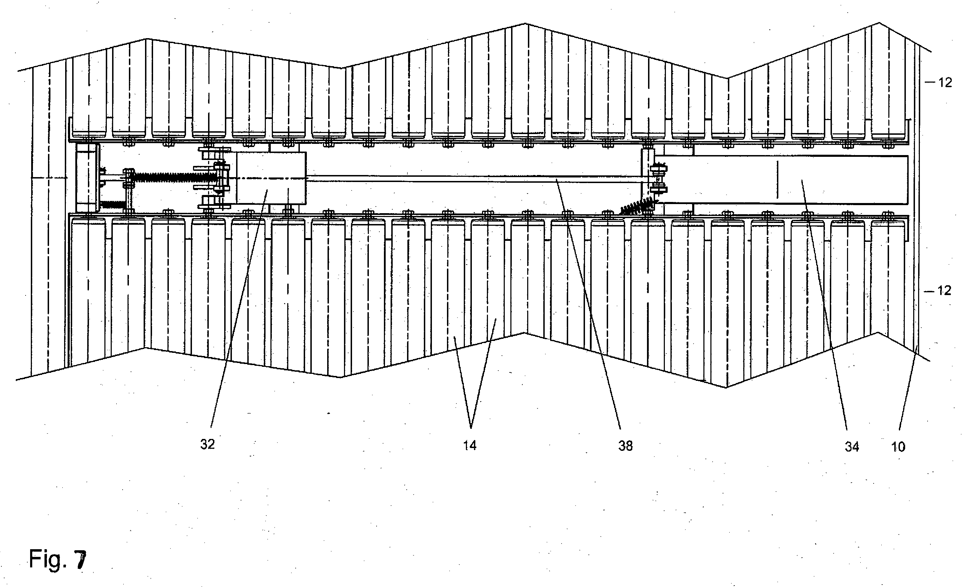

Die Figur 7 zeigt eine Ausführungsform eines erfindungsgemäßen Durchlaufregals mit Ausführungsformen der Steuerfahnen 32 und 34 sowie die Betätigungsstange 38. Das Durchlaufregal hat bei dieser Ausführungsform zwei parallel zueinander verlaufende Rollenbahnen 12, in deren Mitte sich die Separiervorrichtung befindet.

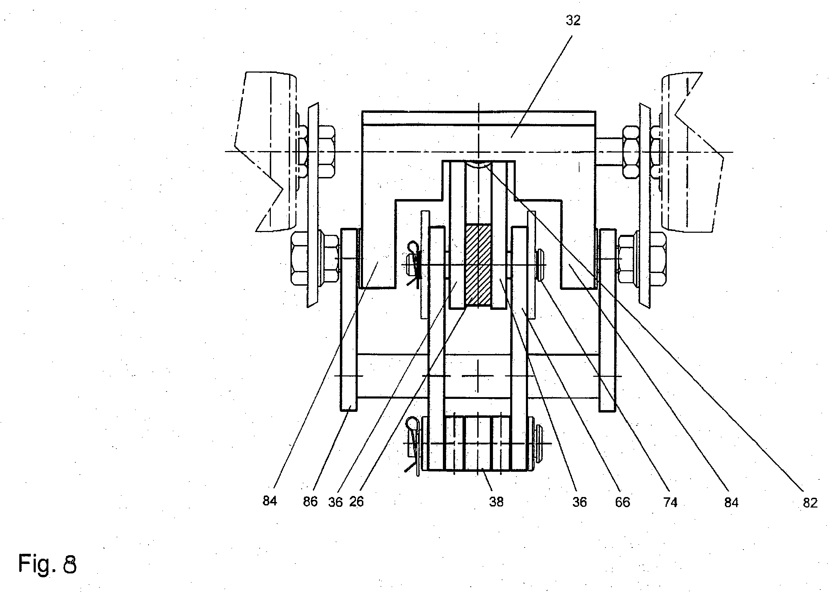

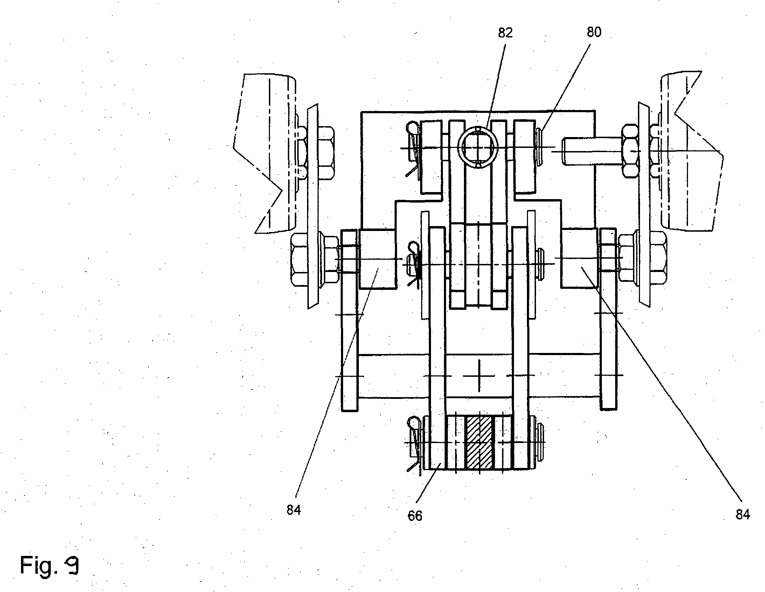

Die Figur 8 zeigt ein Detail der Steuerfahne 32 mit deren Rückstellfeder 82 und der Achse 74 sowie den Drehpunkt 84 (vgl. Fig. 5), um den die Steuerfahne 32 schwenkbar gelagert ist. Außerdem zeigt die Fig. 8 eine Halterung 86, die den Konturblock 66 schwenkbar hält. Die Figur 9 zeigt die Steuerfahne 32 aus der entgegengesetzten Richtung.

### Bezugszeichenliste

- 10: Entnahmeanschlag
- 12: Rollenbahn
- 14: Rollen
- 16: Förderrichtung
- 18: Vereinzelungs-Anschlageinrichtung
- 20: Anschlagelement
- 22: Achse
- 24: Ende
- 26: Betätigungsstange
- 28: Ende
- 30: Konturblock
- 32: Steuerfahne
- 34: Steuerfahne
- 36: Verbindungsstange
- 38: Betätigungsstange
- 40: Achse
- 42: Achse
- 44: Anlenkpunkt
- 46: Ladungsträger
- 48: Ladungsträger
- 50: Ladungsträger
- 52: Kufe
- 54: Unterbrechung
- 58: Ladungsträger
- 60: Ladungsträger
- 62: Ladungsträger
- 64: Ladungsträger
- 66: Steuerungskulisse
- 68: Abschnitt
- 70: Abschnitt
- 72: Anlenkpunkt
- 74: Achse
- 76: Langloch
- 78: Loch
- 80: Schwenkachse
- 82: Rückstellkraft
- 84: Drehpunkt
- 86: Halterung

## Patentansprüche

1. Durchlaufregal mit Separiervorrichtung zur Separierung von von einer Aufgabeseite (AS) zu einem Entnahmeanschlag an einer Entnahmeseite (ES) hinbeförderten Ladungsträgern (46, 48, 50; 58, 60; 62, 64) mit
- einer ersten Steuerfahne (32), die durch ein sich in Förderrichtung (16) nach vorne bewegenden Ladungsträger (46,48,50;58,60;62,64) aus einer ersten Stellung, in der sie sich über die Förderebene (FE) hinaus erstreckt, nach vorne in eine zweite Stellung verschwenkbar ist, in der sie in oder unterhalb der Förderebehe (FE) liegt,
- einer zweiten Steuerfahne (34), die durch ein sich in Förderrichtung (16) nach vorne bewegenden Ladungsträger (46,48,50;58,60;62,64) aus einer ersten Stellung, in der sie sich über die Förderebene (FE) hinaus erstreckt, nach vorne in eine zweite Stellung verschwenkbar ist, in der sie in oder unterhalb der Förderebene (FE) liegt, wobei die zweite Steuerfahne (34) in Förderrichtung Stromabwärts der ersten Steuerfahne (32) liegt, und
- einer in Förderrichtung (16) der Ladungsträger (46,48,50;58,60;62,64) stromaufwärts vorgesehenen Vereinzelungsanschlageinrichtung (18) mit einem Anschlagelement (20), die mit den ersten und zweiten Steuerfahnen (32;34) so gekoppelt ist, dass sich das Anschlagelement (20) in einem verriegelten Anschlagzustand befindet, in dem es sich über die Förderebene (FE) hinaus erstreckt, unter der Voraussetzung, dass sich sowohl die erste Steuerfahne (32) als auch die zweite Steuerfahne (34) in deren zweiten Stellungen befinden,
**dadurch gekennzeichnet, daß** sich das Anschlagelement (20) in einem Freigabezustand befindet, in dem es sich unter die Förderebene (FE) bewegen kann, wenn sich die erste Steuerfahne (32) und/oder die zweite Steuerfahne (34) in der jeweils ersten Stellung befindet.

2. Durchlaufregal nach Anspruch 1, mit mehreren Ladungsträgern (46,48,50;58,60;62,64), die jeweils eine unterbrochene Bodenfläche aufweisen, wobei die erste Steuerfahne (32) so ausgebildet ist, dass sie in einer Unterbrechung (54) der Bodenfläche eines der Ladungsträger (46,48,50;58,60;62,64) ihre erste Stellung einnehmen kann.

3. Durchlaufregal nach Anspruch 2, wobei die zweite Steuerfahne (34) so ausgebildet ist, dass sie ihre erste Stellung nicht innerhalb einer der Unterbrechungen (54) einnehmen kann.

4. Durchlaufregal nach Anspruch 3, wobei die zweite Steuerfahne (34) länger als die erste Steuerfahne (32) ist.

5. Durchlaufregal nach einem der vorhergehenden Ansprüche, wobei die Kopplung der Vereinzelungsanschlageinrichtung (18) mit den ersten und zweiten Steuerfahnen (32; 34) mechanisch, elektromechanisch, elektrisch, elektronisch, elektromagnetisch und/oder optisch ausgebildet ist.

6. Durchlaufregal nach einem der vorhergehenden Ansprüche, mit einem Konturblock (30) zur mechanischen Kopplung der Vereinzelungsanschlageinrichtung (18) mit den ersten und zweiten Steuerfahnen (32; 34), wobei der Konturblock (30) eine Führungsöffnung (66) aufweist, die eine Rastposition aufweist, um das Anschlagelement (20) zu arretieren, wenn der Konturblock (30) durch die ersten und zweiten Steuerfahnen (32; 34) in eine Raststellung geschwenkt ist.

7. Durchlaufregal nach Anspruch 6, wobei die Führungsöffnung als Steuerungskulisse (66) ausgebildet ist, wobei die Steuerungskulisse (66) einen ersten kreissegmentförmigen Abschnitt (68) und einen zweiten Abschnitt (70) aufweist, wobei der zweite Abschnitt (70) einen Winkel mit dem ersten Abschnitt (68) einschließt, mit einer Verbindungsstange (36), die an der ersten Steuerfahne (32) chwenkbar angelenkt ist und die ein Langloch (76) aufweist, wobei sich eine Achse (74) in der Steuerungskulisse (66) befindet, die durch das Langloch (76) verläuft und an der ein erstes Ende (28) einer ersten Betätigungsstange (26) befestigt ist, wobei ein zweites Ende (24) der ersten Betätigungsstange (26) exzentrisch zu einer Schwenkachse (22) des Anschlagelements (20) an der Vereinzelungsanschlageinrichtung (18) angelenkt ist, und mit einer zweiten Betätigungsstange (38), deren erstes Ende an dem Konturblock (30) angelenkt ist und deren zweites Ende exzentrisch zu einer Schwenkachse (42) der zweiten Steuerfahne (34) an der zweiten Steuerfahne (34) angelenkt ist, wobei sich die Achse (74) nur dann in dem zweiten Abschnitt (70) der Steuerungskulisse (66) befindet, um die Betätigungstange (38) in der Rasposition zu arretieren, wenn sich die ersten und zweiten Steuerfahnen (32; 34) jeweils in deren zweiten Stellung befinden.

8. Durchlaufregal nach Anspruch 7, wobei der Winkel zwischen 45 und 135°, insbesondere 90°, beträgt.

9. Durchlaufregal nach Anspruch 7 oder 8, wobei der erste Abschnitt (68) der Steuerungskulisse (66) einen bezüglich des Anlenkpunkts des ersten Endes der zweiten Betätigungsstange (38) an dem Konturblock (30) konkaven Verlauf hat.

## Claims

1. A flow rack having a separating device for separating load carriers (46, 48, 50; 58, 60; 62, 64) conveyed from a feed side (AS) to a removal stop on a removal side (ES), having
- a first control vane (32), which can be pivoted forwards, by a load carrier (2) moving forward in the transport direction (16), from a first position in which the first control vane extends beyond the transport plane (FE) into a second position in which it lies in or below the transport plane (FE),
- a second control vane (34), which can be pivoted forwards, by a load carrier (2) moving forward in the transport direction (16), from a first position in which the second control vane extends beyond the transport plane (FE), into a second position in which it lies in or below the transport plane (FE), wherein the second control vane (34) lies downstream of the first control vane (32) in the transport direction,
- a sorting stop arrangement (18) arranged upstream of the load carrier (2) in the transport direction (16) and having a stop element (20), which sorting stop arrangement is coupled to the first and second control vanes (32; 34) such that the stop element (20) is in a locked stop state, in which it extends beyond the transport plane (FE), when the first control vane (32) and the second control vane (34) are in the second positions thereof,
**characterised in that** the stop element (20) is in a release state in which it can move below the transport plane (FE) once the first control vane (32) and/or the second control vane (34) is/are in the first position.

2. The flow rack according to claim 1, having a plurality of load carriers (2), which each have an interrupted base surface, wherein the first control vane (32) is formed such that it can assume its first position in an interruption (54) of the base surface of one of the load carriers (2).

3. The flow rack according to claim 2, wherein the second control vane (34) is formed such that it cannot assume its first position within one of the interruptions (54).

4. The flow rack according to claim 3, wherein the second control vane (34) is longer than the first control vane (32).

5. The flow rack according to any one of the preceding claims, wherein the sorting stop arrangement (18) is coupled to the first and second control vanes (32; 34) mechanically, electromechanically, electrically, electronically, electromagnetically and/or optically.

6. The flow rack according to any one of the preceding claims, having a contour block (30) for mechanically coupling the sorting stop arrangement (18) to the first and second control vanes (32; 34), wherein the contour block (30) has a guide opening (66), which has a latching position in order to lock the stop element (20) when the contour block (30) is pivoted into a latching position by the first and second control vanes (32; 34).

7. The flow rack according to claim 6, wherein the guide opening is formed as a slotted control link (66), wherein the slotted control link (66) has a first portion (68) in the form of a segment of a circle and a second portion (70), wherein the second portion (70) encloses an angle with the first portion (68), with a connecting rod (36), which is hinged to the first control vane (32) and has a slot (76), wherein a journal (74) is disposed in the slotted control link (66), which extends through the slot (76) and to which a first end (28) of a first actuation rod (26) is secured, wherein a second end (24) of the first actuation rod (26) is hinged to the sorting stop arrangement (18) eccentrically to a pivot axis (22) of the stop element (20), and with a second actuation rod (38), of which the first end is hinged to the contour block (30) and of which the second end is hinged to the second control vane (34) eccentrically to a pivot axis (42) of the second control vane (34), wherein the journal (74) is disposed in the second portion (70) of the slotted control link (66), in order to lock the actuation rod (38) in the latching position, only when the first and second control vanes (32; 34) are each disposed in their second position.

8. The flow rack according to claim 7, wherein the angle is between 45 and 135°, in particular is 90°.

9. The flow rack according to claim 7 or 8, wherein the first portion (68) of the slotted control link (66) has a concave profile with regard to the point of articulation between the first end of the second actuation rod (38) and the contour block (30).

## Revendications

1. Etagère traversante avec dispositif de séparation pour la séparation de supports de charges (46, 48, 50 ; 58, 60 ; 62, 64) transportés à partir d'un côté alimentation (AS) vers un point de prélèvement au niveau d'un côté de prélèvement (ES), avec
- une première signalisation de commande (32) qui, par l'intermédiaire d'un support de charge (46, 48, 50 ; 58, 60 ; 62, 64) se déplaçant vers l'avant dans la direction de transport (16), peut être pivotée vers l'avant à partir d'une première position, dans laquelle elle s'étend vers l'extérieur par-dessus le plan de transport (FE), dans une seconde position, dans laquelle elle se situe dans ou en dessous du plan de transport (FE),
- une deuxième signalisation de commande (34), qui, par l'intermédiaire d'un support de charge (46, 48, 50 ; 58, 60 ; 62, 64) se déplaçant vers l'avant dans la direction de transport (16) à partir d'une première position, dans laquelle elle s'étend vers l'extérieur par-dessus le plan de transport (FE), peut être pivotée vers l'avant dans une seconde position, dans laquelle elle se situe dans ou en dessous du plan de transport (FE), où la deuxième signalisation de commande (34) se situe en aval dans la direction de transport par rapport à la première signalisation de commande (32), et
- un dispositif de butée de séparation (18), prévu en amont dans la direction de transport (16) des dispositifs de charge (46, 48, 50 ; 58, 60 ; 62, 64), avec un élément de butée (20), qui est couplé avec les première et deuxième signalisations de commande (32, 34) de sorte que l'élément de butée (20) se trouve dans un état de butée verrouillé, dans lequel il s'étend vers l'extérieur par-dessus le plan de transport (FE), à condition qu'à la fois, la première signalisation de commande (32) et également la deuxième signalisation de commande (34) se trouvent dans leurs deuxièmes positions, **caractérisé en ce que** l'élément de butée (20) se trouve dans un état de libération, dans lequel il peut se déplacer en dessous du plan de transport (FE) lorsque la première signalisation de commande (32) et/ou la deuxième signalisation de commande (34) se trouvent respectivement dans la première position.

2. Etagère traversante selon la revendication 1, avec plusieurs supports de charge (46, 48, 50 ; 58, 60 ; 62, 64) qui présentent chacun une surface au sol interrompue, où la première signalisation de commande (32) est conçue de telle manière qu'elle peut adopter sa première position dans une interruption (54) de la surface au sol d'un support de charge (46, 48, 50 ; 58, 60 ; 62, 64).

3. Etagère traversante selon la revendication 2, où la deuxième signalisation de commande (34) est conçue de telle manière qu'elle ne peut pas adopter sa première position à l'intérieur de l'une des interruptions (54).

4. Etagère traversante selon la revendication 3, où la deuxième signalisation de commande (34) est plus longue que la première signalisation de commande (32).

5. Etagère traversante selon l'une des revendications précédentes, où le couplage du dispositif de butée de séparation (18) avec les première et deuxième signalisations de commande (32, 34) est conçu de façon mécanique, électromécanique, électrique, électronique, électromagnétique et/ou optique.

6. Etagère traversante selon l'une des revendications précédentes, avec un bloc contour (30) pour le couplage mécanique du dispositif de butée de séparation (18) avec les première et deuxième signalisations de commande (32, 34), où le bloc contour (30) présente un orifice de guidage (66) qui présente une position de butée afin de bloquer l'élément de butée (20) lorsque le bloc contour (30) est pivoté dans une position en butée par les première et deuxième signalisations de commande (32, 34).

7. Etagère traversante selon la revendication 6, où l'orifice de guidage est conçu sous la forme d'une coulisse de commande (66), où la coulisse de commande (66) présente une première partie en forme de segment circulaire (68) et une deuxième partie (70), où la deuxième partie (70) fait un angle avec la première partie (68), avec une tige de liaison (36) qui est articulée de manière à pouvoir pivoter sur la première signalisation de commande (32) et qui présente un trou oblong (76), où un axe (74) se trouve dans la coulisse de commande (66) qui s'étend en traversant le trou oblong (76) et est fixé à une première extrémité (28) d'une première tige d'actionnement (26), où une deuxième extrémité (24) de la première tige d'actionnement (26) est articulée de manière excentrique par rapport à un axe de pivotement (22) de l'élément de butée (20) sur le dispositif de butée de séparation (18), et avec une deuxième tige d'actionnement (38), dont la première extrémité est articulée sur le bloc contour (30) et dont la deuxième extrémité est articulée de manière excentrique par rapport à un axe de pivotement (42) de la deuxième signalisation de commande (34) sur la deuxième signalisation de commande (34), où l'axe (74) se trouve dans la deuxième partie (70) de la coulisse de commande (66) uniquement pour bloquer la tige d'actionnement (38) dans la position de butée lorsque les première et deuxième signalisations de commande (32, 34) se trouvent dans leur deuxième position respective.

8. Etagère traversante selon la revendication 7, où l'angle se situe entre 46 et 135 °, notamment à 90 °.

9. Etagère traversante selon la revendication 7, ou 8, où la première partie (68) de la coulisse de commande (66) a un profil concave en ce qui concerne le point d'articulation de la première extrémité de la deuxième tige d'actionnement (38) sur le bloc contour (30).
